# EUROPEAN PATENT APPLICATION

(11) **EP 4 749 027 A1**
(43) Date of publication of application: **27.05.2026**
(21) Application number: 25215883.7
(22) Date of filing: 14.11.2025
(51) Int. Cl.: E01F 9/70, E01F 15/00, B25J 5/00

(54) **A MACHINE FOR POSITIONING AND GLUING TRAFFIC CONES AND TRAFFIC DELINEATORS ON THE ROAD SURFACE**

(30) Priority: 20.11.2024 IT 202400026181
(71) Applicant: Sicurverde S.r.l., 53045 Montepulciano (IT)
(72) Inventor: ZAZZERI, Alessandra, 53045 Montepulciano (IT)
(74) Representative: Emmi, Mario

(57) **Abstract**

The present invention relates to a machine for automatically arranging/removing road limit elements (100, 200), for example traffic cones (200) and/or traffic delineators (100), said machine comprising a storehouse (60) within which said road limit elements (100, 200) are arranged in use, a robotic arm (50) and wherein the robotic arm (50) has multiple degrees of freedom and is configured to grasp said road limit elements (100, 200), moving them along a movement path and releasing them at a release point.

## Description

### Scope of the Invention

The present invention relates to the technical field of machines for arranging road limit elements, such as traffic cones and/or traffic delineators, on the ground.

More specifically, the invention relates to an innovative machine capable of positioning in a precise, automated and fast way, these road limit elements, both traffic cones and traffic delineators, and also being able to remove them if necessary.

More specifically, the object of the present invention is also to provide a machine which is capable of stably positioning these road limit elements, by distributing a layer of gluing material at the base of said limit elements, which are thus stably arranged on the road surface.

### Brief outline of the prior art

The road limit elements have long been known. There are various types and sizes thereof.

These road limit elements can, for example, comprise traffic cones and traffic delineators (in other words, the rubber flexible road delineator).

The traffic cone is a cone as such, usually made of rubber or plastic, with a base to be arranged on the ground. The traffic delineator provides for a flexible upper part in the form of a flexible rubber plate in the shape of a cone; then the usual base to be positioned on the ground is present.

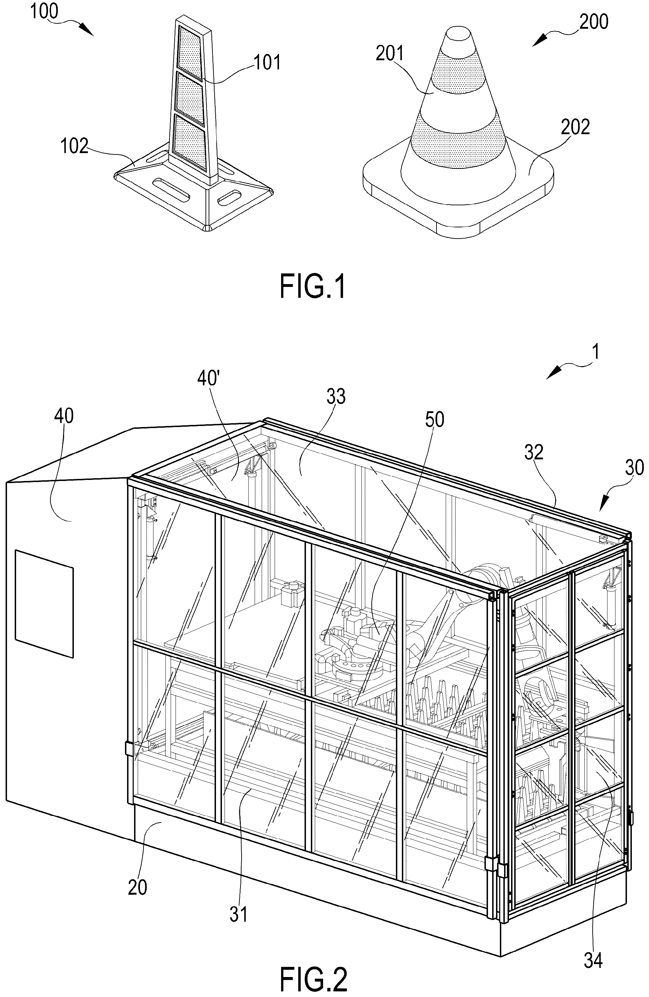

For the sake of clarity, Figure 1 shows a cone 200, having a support base 202, generally quadrangular or rectangular, from which the conical body 201 rises.

Figure 1 also shows the traffic delineator 100 having a base 102, generally quadrangular or rectangular, from which the flexible plate 101 rises, extending in height, according to a plane orthogonal to the base, with a plan shape in said plane that may be rectangular or conical.

These cones and/or traffic delineators are used on the road, for example during maintenance work, to limit areas not accessible to vehicles.

For example, in case of works involving the closure of a certain road section, it is often necessary to divert traffic onto the adjacent route. In this sense, it may happen that a road with two lanes (for example slow lane and fast lane) is delimited precisely with cones or traffic delineators, placed in sequence, to indicate that for a certain section one lane is used for one travel direction while the other lane is used for the opposite direction.

In other cases, these limiting elements simply create an area that is not accessible to the public, where the working means for workers are arranged, thus limiting a work area.

Of course, both in the case of cones and delineators, it is necessary to arrange them up correctly in sequence at a certain distance from each other, often over long distances.

According to one possibility, both cones and traffic delineators are arranged manually by the operators who load these cones onto a truck and move slowly along the path manually arranging these cones or traffic delineators. Clearly, this solution has many technical drawbacks. In particular, manual preparation is slow and time-consuming and requires operators to walk in the lane following the truck. This implies long working times and also safety risks.

It is also known, for example, Publication US2006/0291957 which proposes an automation solution.

According to this solution, an apparatus is described that allows for an automated distribution of cones along a path.

The apparatus is in fact mounted on a truck which, moving at a predetermined speed, makes it possible to release and distribute the cones standing along the predetermined path.

However, this apparatus provides for a sort of track where the cone is inserted, so that the cone, upon contact with the ground, is guided, by friction, along the track until it exits, thus being positioned standing on the ground.

The cones can be fed to the track manually or with a mechanical arm.

However, this solution has a number of technical drawbacks.

In particular, the system for releasing the cone through the track is not precise and, in particular, an excessive speed would cause a risk of the cone tipping over, while too slow a speed would risk blocking the cone along the track.

The system is also structurally complex and bulky, as this track is placed under the flat bed of the truck close to the ground.

The solution is then not flexible as the track size constrains the use of only compatible-sized cones. Different sized cones or products alternative to cones, for example delineators, cannot be used by this machine.

Finally, the system described is not reversible, namely it does not allow for the recovery of the cones but only for their arrangement on the road surface.

It follows that a recovery operation still requires a manual intervention by operators.

Publications GB 2 496 416 A, CN 117 569 238 A, CN 209 555 810 U, CN 114 808 793 A are also known.

### Summary of the invention

The need is therefore felt for a machine that at least partially solves the problems outlined above.

In particular, the object of the present invention is to provide a machine that is flexible, thus making it possible to arrange and/or remove road limit elements, for example cones and/or delineators, of any size.

It is also the object of the present invention to provide a machine that allows for a fast, accurate and reliable process for arranging and also, if necessary, removing said road limit elements.

These and other objects are achieved by the machine for automatically arranging and/or removing road limiting elements, for example traffic cones and/or delineators, according to claim 1.

This machine comprises:
A robotic arm 50;
According to the invention:
   The robotic arm (50) has several degrees of freedom.

Advantageously, this allows the arm to freely move in several axes, for example the three axes X, Y, Z in relation to which it can shift and/or rotate.

This freedom of movement therefore makes it possible to collect the elements from any point and to move towards any point said road limit elements.

Specifically, therefore, said robotic arm is configured to grasp said road limit elements (100, 200) from a collection point (for example a storehouse 60 of the machine), moving them along a movement path and releasing them at a release point (for example a point on the road surface).

The collection point can be a storehouse (60) of the machine and the release point can be the road surface or vice versa.

Thanks to this solution, all the aforementioned technical drawbacks are solved.

The described machine can therefore operate with fast and precise movement.

The intervention by operators is reduced to the minimum, as the machine can operate both in the step of arrangement on the road surface and in the step of removal from the road surface.

The robotic arm can easily adapt to the forward speed of the transport means (usually trucks such as lorries) on which it is placed, so that the limit elements can be precisely arranged even during variations in the speed of said transport means.

Advantageously, said machine can therefore comprise a storehouse 60 within which, in use, said road limit elements are arranged;
Advantageously, the robotic arm (50) is programmable.

This therefore makes it possible to program the robotic arm to perform any work programme according to one or more entered work parameters.

Advantageously, a control system 80 of the robotic arm 50 can therefore be provided for.

An operator, through it, can therefore insert and/or select one or more parameters of a work programme thus creating a work programme or can select a predefined work programme.

In any case, the robotic arm performs the predetermined inserted work programme, moving between a position to collect the limit elements, to carry out collection thereof, and a position to release them.

By means of a special work programme that can be inserted into the control system 80, it is easily possible to actuate a work movement wherein the robotic arm moves between the storehouse and the road surface according to the entered programme, to release the limit element exactly on the ground and standing upright, or collecting it up from the ground (road surface) to store said limit element into the storehouse.

The control system 80 can be provided with a screen, for example a touch screen, to view the inserted parameters and/or to operate selection and/or insertion of parameters directly from the control panel if this is touch screen. Buttons may be present (in combination with or as an alternative to the touch screen) to enter parameters and it is possible to select any pre-set programmes and/or parameters.

The solution is therefore extremely flexible, safe and fast, and the operator intervention is reduced to the simple insertion of the desired work parameters.

Advantageously, means can be provided to distribute a gluing material.

Thus, the robotic arm can make it possible to distribute a layer of gluing material, for example at the base of the road limit element in order to fix it more firmly on the road surface.

More specifically, this gluing material can be preferably distributed at the base of the road limit element, so that this limit element, when placed on the ground, is stable in position.

According to one possible solution, advantageously, these means for distributing a gluing material may therefore provide a tank containing or capable of containing this gluing material.

The robotic arm can therefore be programmed to arrange the base of the limit element in contact with the gluing material in the tank.

For example, the tank may comprise a roller partially immersed in the tank and rotating such as to get impregnated with gluing material. The robotic arm brings the base of the road limit element into contact with this rotating roller in order to allow glue to be distributed to the base of the road limit element by contact with the rotating roller, and then to arrange this limit element on the road surface.

In a further variant, these means for distributing a gluing material can provide a glue spraying system that is activated synchronously to the movement of the robotic arm once the robotic arm, having collected the road limit element from the storehouse, positions it in front of the spraying system to receive the gluing material.

Advantageously, in this solution, a sensor can be provided that detects the position of the road limit element grasped by the robotic arm, thus sending a signal to activate the spray, for example with a timed spraying (a few seconds for example) when the road limit element is correctly positioned by the robotic arm in front of the spray.

The gluing material can be any as required, for example bitumen-based.

Advantageously, this robotic arm has the grasping end that can be interchangeable, in other words it can be replaced with another end.

Depending, therefore, on the specific type of limit element to be manipulated, it is possible to select the right end to be mounted on the robotic arm, thus being able to handle any type of limit element, be it a cone or a delineator, for example. A quick coupling/uncoupling system is made available that allows to quickly disconnect one specific end to quickly mount another with an assembly that automatically connects all the electrical, pneumatic, and other connections.

This provides additional flexibility.

Further one or more of the following elements may be present.

For example, advantageously, a vision system may be provided.

The vision system can therefore cooperate with the robotic arm so that the robotic arm has exact information of the collection/positioning point.

Advantageously, a forward speed measurement system may be provided.

Thus, depending on the distance parameter of the limit elements, the robotic arm adjusts its own work cycle speed.

Advantageously, a height measurement system can be comprised.

In this way height variations due, for example, to unevenness in the road surface, are taken into account by the robotic arm for a precise arrangement on the ground or for a precise collection from the ground.

According to an advantageous aspect of the invention, a perimeter fence comprising one or more walls may be provided.

These walls are preferably shiftable.

Thus, by spacing themselves apart, the walls create the manoeuvring space for the robotic arm while maintaining their protective shielding function.

Advantageously, the machine herein described can be mounted on a flat bed (20) of a transport means, such as a truck.

A structural frame (T) for anchoring to a flat bed (20) of said transport means, for example said lorry, may be advantageously comprised.

Advantageously, the structural frame can form said storehouse (60).

Advantageously, the structural frame can form an anchoring plane (T1) to which the robotic arm is attached.

An object of the present invention is also a transport means such as a truck, preferably a lorry, comprising the machine according to one or more of the previous features.

In particular, the transport means, for example a truck such as a lorry, may have a flat bed (20) on which the machine is fixed.

It is also an object of the present invention the use of a robotic arm (50) with several degrees of freedom programmable according to one or more work programmes to move one or more road limit elements in order to position them on the road surface and/or remove them from the road surface.

According to this use, this robotic arm may preferably be mounted on a road transport means such as a truck.

According to this use and to one advantageous aspect of the invention, the robotic arm can cooperate with means for distributing gluing material.

Advantageously, therefore, the robotic arm can be programmed to collect the road limit element from a collection point, for example said storehouse (60), and then bring it to said means for distributing a gluing material in order to distribute a gluing material at least in a part of the base of the road limit element before arranging that limit element on the road surface.

It is also an object of the present invention a method for arranging one or more road limit elements (100, 200) on the road surface.

Advantageously, the method can be performed by a machine according to one or more of the above characteristics.

Advantageously, this machine can be arranged on the flat bed (20) of a transport means such as a truck.

Advantageously, the method may comprise the following operative steps:
Entering one or more parameters into the control system (80) for defining a work program;
Starting the robotic arm (50) which performs the work program by collecting the road limit elements (100, 200) from the storehouse (60) for arranging them on the road surface according to the work program or, vice versa, by collecting them from the road surface for storing them into the storehouse (60) according to the work program.

Thus, as already discussed, all the advantages of the invention are achieved with an arrangement that is fast, precise and automated, as well as reversible (in other words repositionable into the storehouse from the road surface).

Advantageously, in case of operation of arrangement of the road limit element on the road surface, the robotic arm also cooperates with means for distributing a gluing material by performing an operation for distributing a gluing material in at least part of the support base of said road limit element.

This operation for distributing the gluing material preferably takes place before said limit element is arranged on the road surface and after it has been collected from said storehouse (60).

Thus, thanks to the gluing material, the arrangement is more stable, preventing the road limit elements in use from tipping over.

The person skilled in the art can use various gluing materials available on the market according to their needs.

### Brief description of the drawings

Further features and advantages of the present machinery (or machine, as the case may be), operative method thereof and use, according to the invention, will become clearer with the following description of some embodiments thereof, made by way of example and not limitation, with reference to the accompanying drawings, wherein:
- Figure 1 schematically shows an example of road limit elements in the form of a delineator 100 or cone 200;
- Figures 2 to 10 are views of the machine according to the invention, and in particular Figures 2 to 4 show some views of the machine, Figures 5 and 6 show two views of the robotic arm, and Figures 7 to 10 show further views of the machine in the operative step.

### Description of some preferred embodiments

The present invention relates to an automatic machine, described below in structural and functional detail, which automatically performs an operation for depositing and/or collecting road limit elements (for example traffic cones and/or delineators) on/from the road surface.

Preferably, but not necessarily, the limit elements that are handled with said automatic machine are traffic cones 200 and delineators 100 as, for example, structurally introduced in Figure 1.

Cones, as is well known, are stackable on one another and the stacks of cones can be arranged side by side.

Thus, as explained hereinafter, the cones can be arranged in a storehouse 60 which the machine is provided with, for example placed in a row between them and stacked.

The stack can reach various heights depending on the needs, for example the maximum height can be higher than 0.7 m (metres), for example it can be of 0.8m or 1.5 m. In the case, for example, of 0.8m there are five cones per stack.

The delineators, of course, cannot be stacked on one another, but they can be arranged side by side.

The machine, as explained below, is programmed to automatically arrange the cones and/or traffic delineators on the ground, thus by performing a collection motion from the storehouse to the ground or, vice versa, from the ground to the storehouse.

In the case of arrangement on the ground (in other words on the road surface), for example, a step of arranging approximately 12m with a tolerance of more or less one metre can be envisaged.

In addition, the alignment is very precise being around a tolerance of approximately (+/- 0.4 metres).

Obviously, the above parameters are not binding and different values would be possible.

That being said, the machine object of the invention is preferably transportable in order to be installed on a suitable road transport means such as a truck (for example a lorry), in particular on the flat bed 20 of the truck, for example of the lorry.

The solution wherein the truck (for example lorry) has integrated this machine is not excluded.

Going therefore further deep into the structural description of the invention, figure 2 schematises a truck on which the machine object of the invention is arranged, when it is arranged on the flat bed 20 of the transport means, for example said truck.

In particular, figure 2 shows a schematic of a truck (for example a lorry) with a driver's cab 40 and a flat bed 20. The truck can be of any type, as long as it has a flat bed 20 suitable for mounting the machine.

The machine described hereinafter is fixed and therefore installed on the flat bed 20.

The machine structurally comprises:
A structural frame (T) forming a storehouse 60 and an anchoring support where a robotic arm 50 is arranged;
A perimeter fence 30 with a protective function.

### PERIMETER FENCE:

As schematically shown for example in Figure 2, this perimeter fence generally has protective walls (31, 32, 33, 34) composed with each other to form a fence delimiting the machine.

Figure 2 shows, therefore, a first longitudinal protective wall 31 running along the longitudinal side of the flat bed 20 and extending obviously to a certain height above the height of the machine (obviously the machine must be contained within the perimeter fence). The other longitudinal wall 32, twin to the first wall 31, is provided opposite thereto and parallel thereto. Then there is the transverse wall 34, which stands transversally to said two walls 31 and 32, thereby running along the transverse perimeter side of the flat bed 20 and extending over the same height as the two longitudinal walls 31 and 32. A wall opposite said transversal wall 34 and very close to the cabin wall (40') may be provided or the cabin wall (40') itself may perform this function. Finally, the wall 33 is present, which acts as the ceiling and therefore acts as the upper enclosure (roof) of this perimeter fence.

Substantially, therefore, the perimeter fence runs along the perimeter of the flat bed 20 and at least the two longitudinal walls (31, 32) and the transverse wall 34 opposite the cabin side are high enough to extend below the support surface defined by the flat bed 20, thereby ensuring greater protection.

Preferably this perimeter fence 30 may comprise its own supporting frame, for example to form a tubular metal structure, and with a frame supporting (therefore covered with) panels, for example foamed infill.

The panels could, however, be made of any other material, for example PVC, and/or could be transparent to allow the machine therein to be seen at all times.

According to one aspect of the invention, at least one perimeter wall (31, 32, 34) (whether longitudinal or transverse) is movable between an open position and a closed position. Preferably at least the two longitudinal walls (31, 32) or the two longitudinal walls (31, 32) and the transverse wall (34) are movable.

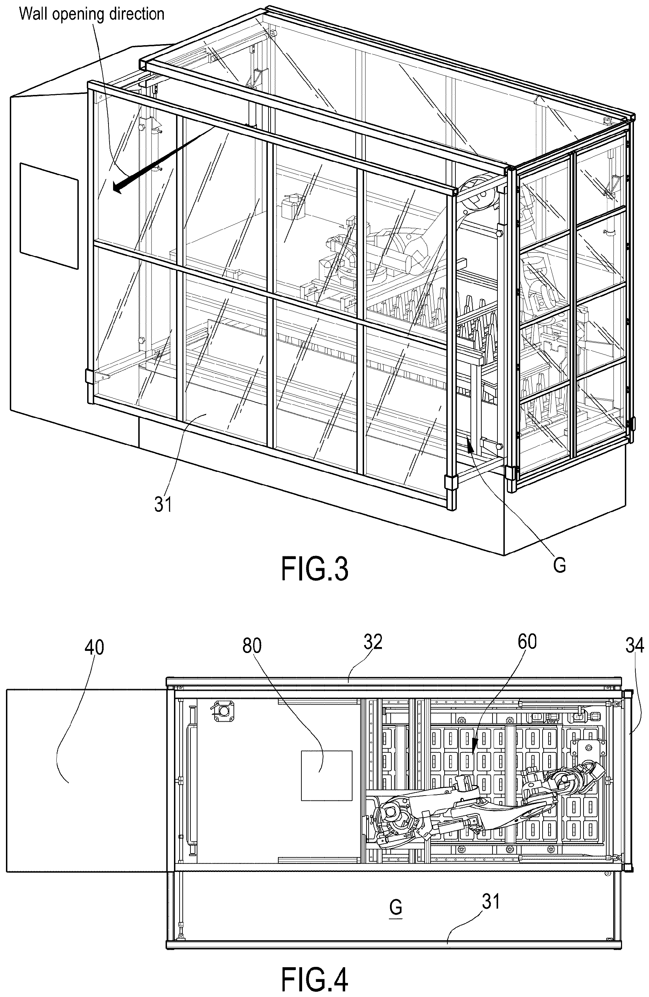

To this end, Figure 3 shows an example of the opening of the longitudinal perimeter wall 31, indicating its direction of movement with an arrow. In particular, each wall can shift to move away from the remaining walls by shifting away, or it can return close to the others (therefore move closer) by shifting closer. Thus, without removing the perimeter protection, space is created for the machine to operate safely thereby moving the road limit elements (100, 200) by means of the robotic arm described in more detail below.

Thus, as shown in Figure 3, the gap (G) that is created by moving the specific wall 31 outwards, that is, shifting outwards, is highlighted. This gap is also clear in Figures 4, 7 and 8.

This movement of the walls (more specifically a shift) can easily be achieved, for example, with actuators acting on the specific wall. To this end, each wall is mounted in a sliding manner relative to a structure.

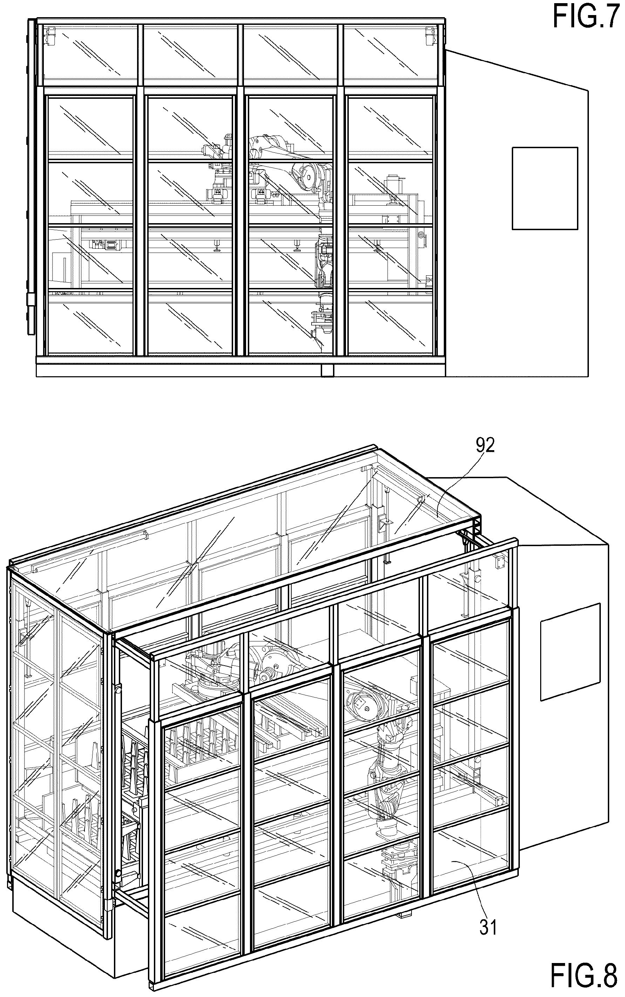

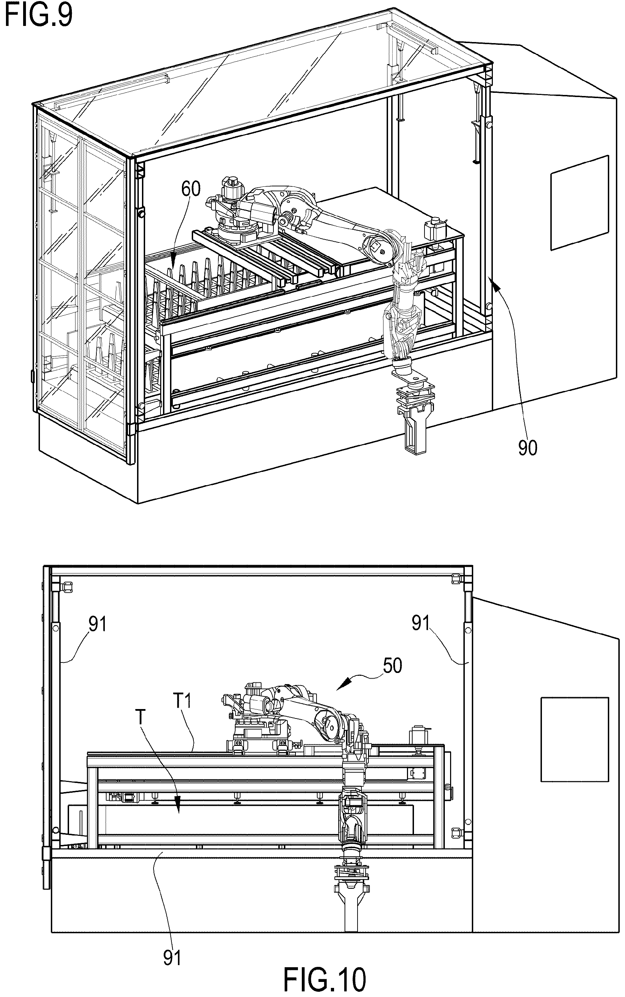

Figure 9 or Figure 10 show, for example, this structure 90 made from support beams 91 to which these walls are slidably attached. Figure 8 shows, in particular, an actuator 92 acting on the wall shown in the moving-away position where it creates the gap. The same concept applies, of course, to all the side walls delimiting the perimeter of the cargo bed (with the exception of the wall behind the driver's cabin).

It is therefore possible to open only the longitudinal perimeter wall 31, as well as to open the opposite wall 32 or all the walls (for example 31, 32 and 34), thus allowing the machine to work freely on all sides around the flat bed 20 (therefore independently of the right, left or rear side opposite the cabin side).

### STRUCTURAL FRAME:

Still as shown in Figure 2, even better in Figure 10, as well as in the other figures, the fence introduced above thus delimits a structural frame (T) which is fixed, for example removably, to the flat bed 20 of the truck and which is for supporting the robotic arm 50 and the other components described below.

For example, Figure 10 shows a side view of this structural frame (T), which creates an anchoring plane (T1) for the robotic arm 50 and at the same time forms a storehouse 60 (see also Figure 9) for storing the limit elements.

The structural frame (T) is therefore formed by beams and planes (for example in sheet metal) which in fact form a sort of box generating the space 60 for the limit elements, that is, the storehouse, and the anchoring plane (T1) for the robotic arm.

### ADDITIONAL MACHINE COMPONENTS:

First of all, there is a robotic arm 50.

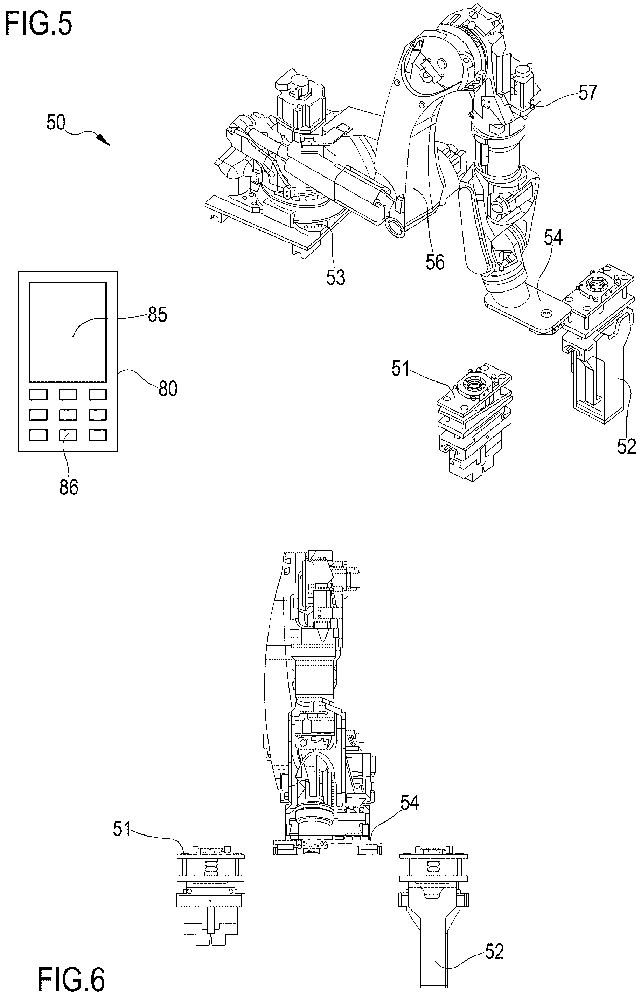

This robotic arm is also shown alone in Figures 5 and 6.

This robotic arm 50, also known as a manipulation system, may preferably be an anthropomorphic robot with several degrees of freedom.

Thus, it can be an anthropomorphic robot with three or more than three movement axes, for example with six axes.

The Applicant surprisingly found the Kawasaki brand six-axis anthropomorphic robot particularly functional for the purposes, although of course other models can by all means be used.

In all the above cases, the robotic arm is fixed to the frame, in particular to the plane (T1), for example by means of suitable bolts and/or welding.

The robot is controlled by a control unit 80.

The control unit 80 is schematically represented in Figure 5. It is, as is well known, provided with a video screen 85 (for example touch screen) and keys 86 such that the operator can enter the work parameters to be set (from the keyboard and/or screen), generally selectable from an on-screen menu. Thus, a work programme is in fact automatically selected according to the choices made by the operator.

The work parameters that can be set can be different from each other, including, for example, selecting the type of limit elements to be handled, in other words delineators or cones and/or defining whether the operation to be performed is a collection from the storehouse to place into the street or, vice versa, storing from the street back into the storehouse and/or the side from which to operate (right or left) and/or the arrangement distance, etc.

For example, already predefined and selectable work programmes can be provided, or it is also possible to enter one or more parameters by selecting the equivalent item from a menu (for example Select Delineator or Cone) such that a work programme is automatically generated according to the choices made.

In any case, a predetermined work programme is created, which is then executed automatically by the robot as the transport means moves forward.

More specifically, the robot 50 is provided with:
A system 54 for quickly changing the tool (51, 52) (see Figure 5) with which the operator can change the gripper (that is, the handling part) in a matter of minutes according to the type of limit element to be manipulated.

Figure 5 shows, in fact, a plate 54 at the end of the robotic arm to which the two end grippers 51 and 52 can be connected, one of which is suitable for grasping a flat body such as the delineator and the other suitable for grasping and thus manoeuvring the cone.

Depending on the type of limit element to be arranged/manipulated, the operator can quickly change the gripper (51, 52).

The change of the tool (or gripper as it may be called) by means of a quick connect/release system ensures the various pneumatic and electrical connections required to operate the tool.

Thus, if cones are to be moved, the operator first mounts the correct gripper and then enters the cone information from control panel 80.

Figure 5 shows very well the robotic arm 50 (which, as said, is a product in itself, however, also commercially available) which thus comprises: an anchoring part 53 that is anchored to the structural frame of the machine; the drives and actuators adapted to move, according to the various degrees of freedom (for example around six axes), the parts (56, 57) of the arm which then terminate with the attachment plate 54 to connect the grippers 51 or 52. The arm, therefore, has its various parts capable of roto-shifting, thus being able to simulate the multiple movements of a human arm.

Figure 5 then schematically shows the control unit 80 through which the operator enters (usually by selecting from pre-set menus) the operations to be performed and/or one or more parameters in general.

The robotic arm cooperates or is provided with one or more sensors that enable it to operate correctly.

In particular, the sensors assist the robotic arm operations by helping it to correctly find the height at which the limit elements are arranged on the ground and/or by respecting the pre-set distance of the limit elements from each other and/or by finding the exact position at which they are arranged.

In particular, one or more of the following systems may be present:

### 1) A height measurement system.

It can for example be a distance sensor capable of measuring a ground distance from a reference flat bed, for example from the flat bed 20 or from the anchoring flat bed of the arm. This measurement is useful for correctly arranging the limit elements on the ground or for collecting them.

In fact, the distance sensor makes it possible to identify the actual distance of the flat bed from the ground. Since the flat bed of the truck is mounted on shock absorbers, this height is not fixed but depends on the distribution of masses and on the not perfectly smooth ground. The sensor is used to search for the correct distance each time. Otherwise, if the robot had to always go to a fixed height, it could leave the limit element in the air without having acted with adequate pressure on the road surface, or it could go into alarm by going to a lower height than the ground.

The sensor reads continuously but, preferably, the height information is given to the robot at the beginning of each limit element manipulation cycle.

In a possible solution, it can be used a Radar sensor attached to the flat bed 20, which by pointing towards the ground, outputs information about the height of the flat bed 20 from the ground. Thus, the robotic arm has an exact reference distance measurement for the correct placement/removal of the limit elements.

### 2) A forward speed measurement system.

In fact, in order to be able to deposit the limit elements correctly on the ground, in particular their spacing, it is useful to know the speed of the transport means.

If the truck varies its forward speed by increasing it and a predetermined distance (for example about twelve metres) has to be observed between one element and the next, then the robot cycle time is reduced. In fact, the cycle time is given by the formula (V/d)=t where V=Speed of the transport means, d= distance, t= cycle time. By keeping the distance constant and increasing the forward speed of the transport means, the depositing time and thus the cycle time is reduced. So, in other words, the arm has to operate faster. If the vehicle slows down, it must obviously operate with a lower cycle time.

In this case, an encoder can be used. The cylindrical part of the encoder can be mounted on the hub of a wheel so that the sensor rolls integrally with the wheel. The truck forward speed can be determined from the rotation speed information.

Thus, the robot adjusts its cycle time.

The speed information is preferably given continuously to the robot.

### 3) A vision system may be present.

The robot automatically detects the position of the elements to be recovered, as this vision system is present making it possible for the robot to know the coordinates at which the elements are to be grasped both during the feeding, depositing and collection steps. The vision system can be in the form of a camera, positioned in such a way that it can see the dotted line of the road, for example. The vision system communicates to the robot where to position the component to be released (cone and delineator), while in the collection step it communicates the distance from the dotted line to the robot.

Both depositing and recovery of the elements are performed with the vehicle moving forward.

The information is given to the robot at the beginning of each cycle.

**4)** There may also be a glue dosing device that makes it possible to dose a predetermined quantity of glue at the base of the limit element before it is deposited on the asphalt.

In particular, there may be a tank with glue kept at temperature, where the robot dips the limit element and then deposits it on the ground. In particular, the robot can pass the base of the limit element over the tank to dip it with glue.

The tank could be arranged in a convenient location on the structural frame.

### EXAMPLE OF USE:

Having structurally described the invention, a description of use and operation thereof follows.

According therefore to the schematic in Figures 7-10 the robotic arm is shown, which is moved between the storehouse and the ground to collect the limit elements and place them on the ground or, collect them from the ground and store them in the storehouse.

In fact, both Figure 7 (a side view) and Figure 8 show the robotic arm in a position wherein, for example, it is placing the element collected from the storehouse on the ground (the item is not shown for the sake of simplicity) or collecting it from the ground for storing it into the storehouse. The same Figures 7 and 8 are shown again in Figures 9 and 10 without the protective wall for better see them.

All the operator has to do, therefore, is to enter the planned work programme via the control system 80 by entering the work parameters or by setting a specific programme already available from the menu.

At this point, by starting the machine, the robotic arm automatically starts collecting from the storehouse and arranging on the ground while the truck on which it is arranged moves forward.

If the glue tank is present, the glue distribution can be inserted in the work programme.

Any sensors described above, if present (one or more of them), assist the robotic arm in correctly performing the various operations by compensating for variations in the flat bed height, variations in the transport means speed, etc.

Thus, as the transport means on which the machine is mounted moves forward, the robotic arm automatically collects the road limit elements from the storehouse to release them onto the road surface or, vice versa, collects them from the road surface to store them in the storehouse.

Depending on the speed of the transport means, the robotic arm automatically adjusts its cycle time to comply with the set positioning parameters, possibly assisted by information from the vision system and the distance sensor.

## Claims

1. A machine for automatically arranging/removing road limit elements (100, 200), for example traffic cones (200) and/or traffic delineators (100), said machine comprising:
- A robotic arm (50);
- **Characterized by the fact that:**
- The robotic arm (50) has more degrees of freedom and is configured to be able to grasp said road limit elements from a collection point, moving them along a movement path and releasing them at a release point.
- Preferably the machine further comprises a storehouse (60) into which, in use, said road limit elements (100, 200) are arranged.

2. The machine, according to claim 1, wherein the robotic arm (50) is programmable and wherein a control system (80) of the robotic arm (50) is further comprised through which inserting and/or selecting one or more work-program parameters or a work program in such a way that the robotic arm (50) automatically performs a predetermined work program by moving between said collection point of the limit elements for collecting them and said release point for releasing them.

3. The machine, according to claim 1 or 2, wherein the machine comprises means for distributing a gluing material.

4. The machine, according to one or more of the previous claims, comprising a vision system and/or a forward speed measurement system and/or a height measurement system.

5. The machine, according to one or more of the previous claims, comprising a perimeter fence (31, 32, 33, 34) comprising one or more shiftable walls.

6. The machine, according to one or more of the previous claims, configured to be mountable on a flat bed (20) of a truck.

7. The machine, according to one or more of the previous claims, comprising a structural frame (T) for anchoring it to a flat bed (20) of a truck, the structural frame forming said storehouse (60) and an anchoring plane (T1) to which the robotic arm is fixed.

8. A road transport means comprising the machine according to one or more of the previous claims.

9. The use of a robotic arm (50) with more degrees of freedom programmable according to one or more work programs for moving road limit elements (100, 200) in order to position them on the road surface or to remove them from the road surface.

10. The use, according to claim 9, wherein the robotic arm cooperates with means for distributing a gluing material and is programmed to collect said road limit elements from a storehouse (60) to then perform, through said means for distributing a gluing material, an operation of distribution of gluing material at least in one part of base of each road limit element collected, before arranging them on the road surface;
preferably said operation of distribution of gluing material provides for arrangement by the robotic arm of at least one part of the basis of the road limit element in contact with gluing material for example present in a collection tank or sprayed through a spraying system.

11. A method for arranging one or more road limit elements (100, 200) on the road surface through a machine according to one or more of the previous claims from 1 to 9 arranged on the flat bed (20) of a road transport means such as a truck (1), the method comprising the following operative steps:
- Entering one or more parameters into the control system (80) for defining a work program;
- Starting the robotic arm (50) which performs the work program by collecting the road limit elements (100, 200) from the warehouse (60) for arranging them on the road surface according to the work program or, vice versa, by collecting them from the road surface for storing them into the storehouse (60) in accordance with the work program.

12. The method, according to claim 11, wherein, in the event of operation of arrangement of the road limit element on the road surface, before said limit element has been arranged on the road surface and after having been collected from said storehouse (60), the robotic arm performs in combination with the means for distributing a gluing material an operation of distribution of a gluing material in at least one part of the support base of said road limit element;
preferably said operation of distribution of a gluing material provides for arrangement by the robotic arm of at least one part of the basis of the road limit element in contact with gluing material for example present in a collection tank or sprayed through a spraying system.
